# EUROPÄISCHE PATENTSCHRIFT

(11) **EP 1 111 334 B1**
(45) Veröffentlichungstag und Bekanntmachung des Hinweises auf die Patenterteilung: **25.06.2003**
(21) Anmeldenummer: 00126496.9
(22) Anmeldetag: 08.12.2000
(51) Int. Cl.: G01B 11/24, G01B 11/08

(54) **Verfahren und Anordnung zum Lokalisieren von zylinderförmigen Objekten**
Method and apparatus for the localisation of cylindrical objects
Méthode et dispositif pour la localisation d'objets cylindriques

(30) Priorität: 10.12.1999 DE 19959623
(43) Veröffentlichungstag der Anmeldung: 27.06.2001
(73) Patentinhaber: Fraunhofer-Gesellschaft zur Förderung der angewandten Forschung e.V., 80636 München (DE)
(72) Erfinder: Lehmann, Klaus, Dipl.-Ing., 71034 Böblingen (DE); Klaiber, Thomas, Dipl.-Ing., 70199 Stuttgart (DE)
(74) Vertreter: Gagel, Roland, Dr.

(56) Entgegenhaltungen:
- EP-A- 0 440 418
- DE-A- 4 418 036
- FR-A- 2 606 140
- US-A- 4 521 966

## Beschreibung

### Technisches Anwendungsgebiet

Die vorliegende Erfindung betrifft ein Verfahren und eine Anordnung zum Lokalisieren und gegebenenfalls Handhaben von zylinderförmigen Objekten, die in einem Abstellbereich abgestellt sind. Bei den zylinderförmigen Objekten handelt es sich insbesondere um Fässer oder zylinderförmige Behälter, die einschichtig auf Paletten abgestellt sind. Für die Handhabung dieser Behälter mit einem Handhabungsgerät ist es erforderlich, beim Greifen die genaue Position der Behälter auf der Palette zu erkennen. Die vorliegende Erfindung liefert hierfür ein Verfahren und eine entsprechende Anordnung, die eine problemlose automatische Entladung der Behälter von der Palette sowie - in einer besonderen Ausführungsform - die seitenrichtige Ablage der Behälter ermöglicht.

### Stand der Technik

Derzeit eingesetzte Systeme zum Erkennen der Position der Behälter für das automatische Entladen verwenden senkrecht über der Palette angeordnete Kameras zur Lokalisierung. Über ein geeignetes Bilderkennungs- und Auswertesystem können dann die Positionen der einzelnen Behälter auf der Palette bestimmt werden. Derartige Systeme haben jedoch den Nachteil, dass Umgebungslicht den Erkennungsvorgang stören kann. Weiterhin muss die Kamera sehr weit entfernt über der Palette angebracht werden, um perspektivische Verzerrungen zu minimieren. Dies führt zu einer sehr großen Einbauhöhe des Kamerasystems.

Ein weiteres Problem bei der Handhabung von Fässern besteht in der Erkennung des Spundlochs an der Stirnseite der Fässer. Die Lage des Spundlochs ist insbesondere für die seitenrichtige Ablage der Fässer nach der Entnahme von der Palette erforderlich. Bei der aus dem Stand der Technik bekannten Technik der Erfassung der Fassoberflächen mit einer Kamera werden lediglich Helligkeitsinformationen ausgewertet. Die Erkennung des Spundlochs kann hierbei durch runde Aufkleber, beispielsweise Prüfsiegel, gestört werden und zu Fehlern führen.

Die DE 44 08 948 C2 beschreibt ein Verfahren und eine Vorrichtung zu Überprüfung von Gebinden. Die Gebinde werden hierbei auf Verformungen hin geprüft, um defekte Gebinde gegebenenfalls aussondern zu können. Zur Erfassung der äußeren Konturen der untersuchten Gebinde wird eine Zeilen- oder Videokamera eingesetzt, die über den Gebinden angeordnet ist. In einer Ausführungsform der Vorrichtung sind zusätzlich Messeinrichtungen zur Abstandsmessung über den Gebinden angeordnet, um eine spezielle Art der Deformation der Fässer erkennen zu können. Die Druckschrift beschäftigt sich jedoch weder mit der Lokalisierung der einzelnen Fässer, noch mit der Erfassung des Spundlochs an den Fässern.

Aus der DE 40 04 354 A1 ist ein Verfahren zur Erkennung des Spundlochs an auf Paletten stehenden Fässern bekannt, bei der die Fässer an einer die Fassoberfläche erfassenden Zeilenkamera vorbeigeführt wird, die das Bild der Stirnfläche aufnimmt. Dieses System für den Einsatz in einer Fassfüllmaschine hat den Vorteil einer kostengünstigen Realisierung aufgrund der vergleichsweise geringen Kosten einer Zeilenkamera. Die Erkennung des Spundlochs basiert jedoch auch bei dieser Druckschrift auf einer Helligkeitsauswertung des erfassten Bildes, so dass die Erkennung gerade bei Vorliegen von Aufklebern auf den Fässern nicht zuverlässig arbeitet.

Aus FR 2 606 140 ist bekannt, an einem Banmstamm ein Abstandsprofil aufzunehmen und durch Einpassen eines kreises die Mittelachse des Baumstamms zu bestimmen.

Der vorliegenden Erfindung liegt die Aufgabe zugrunde, ein Verfahren sowie eine Anordnung zum Lokalisieren von zylinderförmigen Objekten anzugeben, die zuverlässig arbeiten, geringen Bauraum erfordern und ein automatisches Entnehmen der zylindrischen Objekte von einem Abstellbereich ermöglichen. Gemäß einer Ausführungsform der Erfindung sollen das Verfahren und die Anordnung insbesondere das automatische Entladen von einschichtig auf einer Palette abgestellten Getränkefässern unter Berücksichtigung der Lage des Spundlochs ermöglichen.

### Darstellung der Erfindung

Die Aufgabe wird mit dem Verfahren und der Anordnung nach den Ansprüchen 1 bzw. 12 gelöst. Vorteilhafte Ausgestaltungen des Verfahrens und der Anordnung sind Gegenstand der abhängegen Ansprüche.

Beim erfindungsgemäßen Verfahren zum Lokalisieren von zylinderförmigen Objekten wird zunächst ein Abstandsprofil der Objekte in einer Messebene von einem Fixpunkt auf einer Seite des Abstellbereichs mit Hilfe einer Abstandsmesseinrichtung aufgenommen. Die Messebene liegt hierbei vorzugsweise parallel zur Fläche, auf der die zylinderförmigen Objekte abgestellt sind. Es versteht sich von selbst, dass die Messebene die Objekte schneiden muss. Als Ergebnis der Abstandsmessung ergibt sich eine Konturlinie der im Abstellbereich abgestellten Objekte in der Messebene. Diese Konturlinie gibt die Kontur der Objekte auf der zum Fixpunkt gerichteten Seite wieder. Diese Konturlinie wird in einer Auswerteeinrichtung bzw. einer Datenverarbeitungsanlage ausgewertet. Bei der Auswertung werden rechnerisch Kreise in die Konturlinie eingepasst. Die jeweiligen Orte der eizelnen Objekte werden schließlich anhand der Mittelpunkte der in die Konturlinie eingepassten Kreise bestimmt.

Die Radien der für den Einpassungsvorgang herangezogenen Kreise können durch die vorbekannten Radien der zylinderförmigen Objekte fest vorgegeben werden. Sind diese Radien der zylinderförmigen Objekte nicht bekannt, so kann die Einpassung der Kreise in die Konturlinie durch Variation der Kreisradien von einem größten Wert zu einem kleinsten Wert vorgenommen werden. Der größte und der kleinste Wert orientieren sich hierbei an den in der Praxis sinnvollen Radien der Objekte. Vorzugsweise wird hierbei der Radius der Kreise bei der Einpassung in Stufen erniedrigt.

In einer vorteilhaften Ausführungsform des Verfahrens wird neben den jeweiligen Orten der einzehnen Objekte auch die Zugriffsrichtung eines Handhabungsgerätes auf die Objekte aus der Konturlinie bestimmt. Hierbei werden nach der Einpassung der Kreise und der daraus resultierenden Lokalisierung der Objekte die jeweils benachbarten Objekte des gerade zu handhabenden Objektes bzw. die diese repräsentierenden eingepassten Kreise mit einer tangentialen Verbindungslinie verbunden. Die Zugriffsrichtung des Handhabungsgerätes wird senkrecht zu dieser Verbindungslinie in Richtung des Mittelpunktes des dem zu handhabenden Objekts entsprechenden Kreises festgelegt.

In einer weiteren vorteilhaften Ausführungsform des Verfahrens werden die Objekte bei ihrer Entnahme durch das Handhabungsgerät mit ihrer Stirnfläche an einer zeilenweise detektierenden Messeinrichtung vorbeigeführt, die die Oberflächenkontur der Stirnfläche dreidimensional erfasst. Dies kann beispielsweise durch eine Kombination eines Lasers mit einem CCD-Zeilenscanner unter Einsatz der Lichtschnitttechnik erfolgen. Auch zeilenweise detektierende Abstandssensoren können eingesetzt werden. Durch Auswertung der Oberflächenkontur wird festgestellt, ob sich auf dieser Stirnfläche ein Spundloch befindet.
Diese Erfassung des Spundloches ist sehr zuverlässig, da sie sich an der dreidimensionalen Oberflächenkontur und nicht an einem flächenhaften Abbild der Oberfläche orientiert, so daß sie nicht durch eventuell aufgebrachte Aufkleber verfälscht werden kann. Die Erfassung ist auch unabhängig vom Umgebungslicht. Durch die Erfassung des Spundlochs wird festgestellt, ob die Objekte bzw. in diesem Fall die Fässer eventuell nach der Entnahme durch das Handhabungsgerät und vor dem Abstellen gedreht werden müssen, so dass das auf der Fassoberseite bzw. Stirnseite eingelassene Spundloch bei den durch das Handhabungsgerät abgestellten Fässern immer oben oder unten angeordnet ist.
Zusätzlich kann bei dieser Ausführungsform des Verfahrens durch die Messeinrichtung in Verbindung mit der bekannten Handhabungscharakteristik, insbesondere Greifhöhe und Handhabungsbahn, des Handhabungsgerätes auch die Höhe des Behältnisses ermittelt werden. Dies ermöglicht das kollisionsfreie Abstellen eventuell vor der Ablage gedrehter Fässer. Die bekannten Verfahren des Standes der Technik sind nicht in der Lage, eine derartige Information zu liefern.

Die erfindungsgemäße Anordnung besteht zumindest aus einer Abstandsmesseinrichtung zum Erfassen eines Abstandsprofils der Objekte in einer Messebene von einem Fixpunkt auf einer Seite des Abstellbereichs, sowie einer Auswerteeinheit, die die jeweilisen Orte der einzelnen Objekte durch rechnerisches Einpassen von Kreisen in die aus dem Abstandsprofil resultierende Konturlinie ermittelt. Bei der Abstandsmesseinrichtung handelt es sich vorzugsweise um einen 2D-Laserscanner oder um CCD-Triangulationssensoren.
In einer bevorzugten Ausführungsform ist weiterhin eine Messeinrichtung, insbesondere ein Zeilenscanner in Verbindung mit einem Laser, zur Ermittlung der dreidimensionalen Oberflächenkontur der Stirnseite der Objekte vorgesehen, aus der das Spundloch ermittelt werden kann.

Das erfindungsgemäße Verfahren und die zugehörige Anordnung ermöglichen die Erkennung der Positionen der zylinderförmigen Objekte unabhängig vom Umgebungslicht. Es wird keinerlei Sensorik über dem Abstellbereich der Fässer, beispielsweise einer Palette, benötigt. In einer bevorzugten Ausführungsform kann neben den jeweiligen Positionen der einzelnen Objekte auch die Höhe der Objekte ermittelt und - im Falle von Fässern - das Spundloch weitgehend unabhängig von der Gestaltung und Aufmachung der Fassoberfläche erkannt werden. Das erfindungsgemäße Verfahren und die zugehörige Anordnung eignen sich daher sehr gut für die Ansteuerung eines Roboters zur Entnahme der Objekte vom Abstellbereich.

### Wege zur Ausführung der Erfindung

Das erfindungsgemäße Verfahren und die zugehörige Anordnung werden nachfolgend anhand von Ausführungsbeispielen in Verbindung mit den Zeichnungen ohne Beschränkung des allgemeinen Erfindungsgedankens nochmals beispielhaft erläutert. Hierbei zeigen:
- Fig. 1: ein Beispiel für die Anordnung der Messeinrichtung bei der Aufnahme des Abstandsprofils in Draufsicht sowie in Seitenansicht;
- Fig. 2: ein Beispiel für eine erfasste Konturlinie mit und ohne eingepasste Kreise;
- Fig. 3: schematisch die Vorgehensweise beim Einpassen der Kreise in die Konturlinie;
- Fig. 4: ein Beispiel für die Ermittlung der Zugriffsrichtung eines Handhabungsgerätes auf die Objekte; und
- Fig. 5: ein Beispiel für die Erfassung des Spundlochs beim erfindungsgemäßen Verfahren.

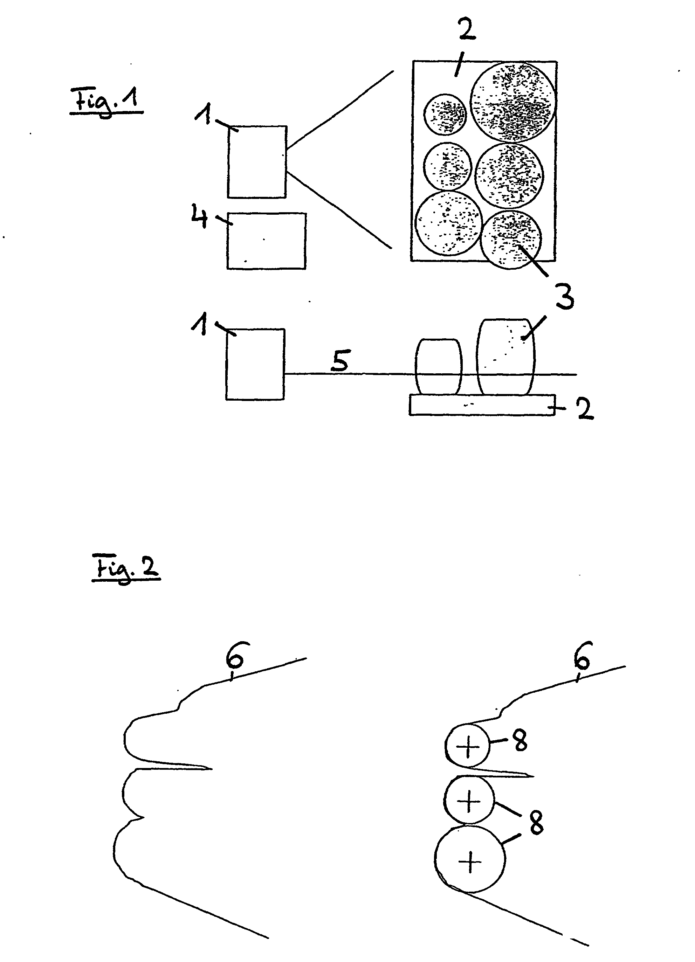

Figur 1 zeigt eine Anordnung einer Abstandsmesseinrichtung 1 zur Durchführung des erfindungsgemäßen Verfahrens. Die Abstandsmesseinrichtung 1 ist seitlich neben einer Palette 2 mit abgestellten zylinderförmigen Behältern 3 unterschiedlichen Durchmessers angeordnet. Der obere Teil der Figur zeigt diese Anordnung in Draufsicht, wobei auch ein Handhabungsgerät 4 zum Entladen der Behältnisse 3 von der Palette 2 schematisch dargestellt ist. Die Abstandsmesseinrichtung 1, die beispielsweise ein oder mehrere 2D-Laserscanner oder andere Sensoren zur Abstandsmessung umfasst, wird so angeordnet, dass die Messebene 5 der Abstandsmesseinrichtung über der Oberfläche der Palette 2 und parallel zu dieser liegt. Dies ist im unteren Teil der Figur 1 gut zu erkennen. Die Abstandsmesseinrichtung 1, im Folgenden als beispielhaft als Laserscanner bezeichnet, schaut dabei vorzugsweise aus der Richtung auf die Palette 2, von der aus die Palette mit dem Handhabungsgerät 4 entladen wird.

Bei der Abstandsmessung wird die Kontur der Seite der auf der Palette 2 abgestellten Fässer 3 erfasst, die zum Laserscanner 1 gerichtet ist. Ein Beispiel für eine derartige Konturlinie 6 ist im linken Teil der Figur 2 für die Anordnung der Figur 1 dargestellt.

Um die gemessene Konturlinie 6 werden durch ein zweistufiges Vorgehen - einer Grobanpassung und einer Feinanpassung - mathematisch Kreise eingepasst, deren Radius durch die bekannten Radien der Fässer 3 vorgegeben ist.

Die vom Laserscanner gemessene Konturlinie wird Punkt für Punkt wie folgt untersucht:

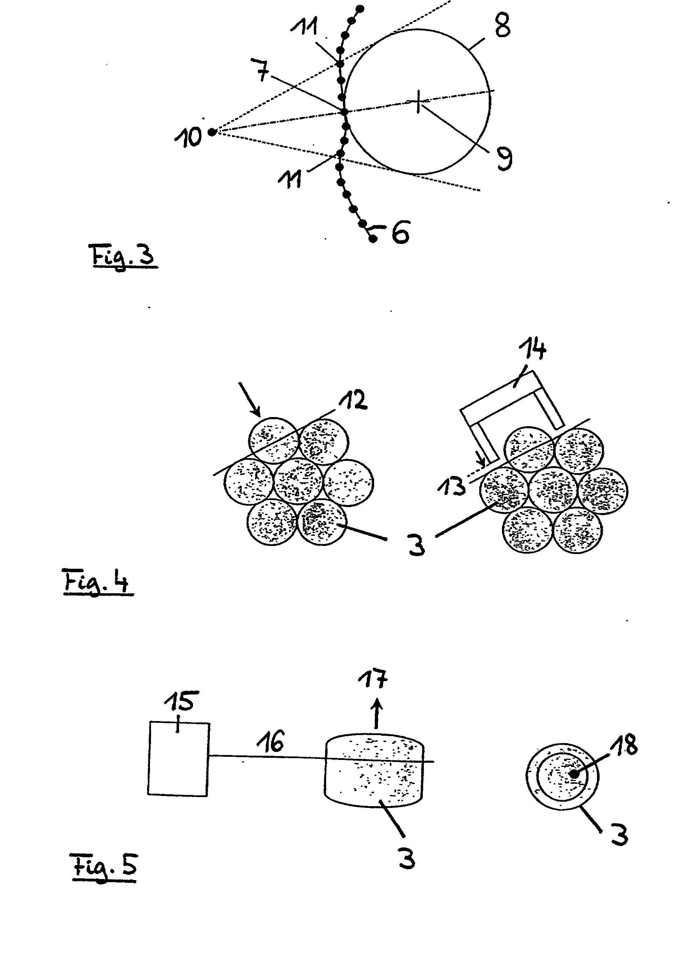

Für den jeweils zu untersuchenden Messpunkt 7 auf der Kontur- bzw. Scanlinie 6 wird ein Kreis 8 so festgelegt. dass sein Mittelpunkt 9 auf der Verbindungsgeraden zwischen dem gedachten Mittelpunkt 10 des Laserscanners und dem untersuchten Messpunkt 7 liegt. Dies ist in Figur 3 im Detail dargestellt. Der Kreis 8 liegt vom Scanner 1 aus gesehen hinter der Scanlinie 6 und der untersuchte Messpunkt 7 ist der vorderste Punkt des Kreises. Nun werden vom gedachten Mittelpunkt 10 des Scanners zwei Geraden links und rechts tangential an den Kreis 8 gelegt. Alle Messpunkte auf der Scanlinie 6, die sich innerhalb des durch diese beiden Geraden definierten Öffnungswinkels befinden, werden ausgewählt. Von den ausgewählten Messpunkten werden jeweils n ≥ 0 Randpunkte 11 abgeschnitten. Für die verbliebenen ausgewählten Messpunkte wird die Entfernung zum Kreismittelpunkt 9 berechnet. Die mittlere Abweichung aller berechneten Entfernungen vom Kreisradius wird als Maß dafür verwendet, wie wahrscheinlich an dieser Stelle der Scanlinie 6 ein Kreis anzutreffen ist. Unterschreitet dieses Maß eine im vorab festzulegende Schwelle, so wird für die ausgewählten Messpunkte ohne Randpunkte eine Feinbestimmung der Kreisposition vorgenommen.

Bei dieser Feinbestimmung wird für die zu untersuchenden Messpunkte die mittlere Abweichung wie oben berechnet. Durch ein nummerisches Optimierungsverfahren wird der Kreismittelpunkt 9 so verschoben, dass diese mittlere Abweichung minimal wird. Wenn dabei einzelne Messpunkte eine zu große Abweichung vom Kreisradius aufweisen, wird der entsprechende Punkt von der weiteren Betrachtung ausgenommen. Auf diese Weise werden "Ausreißer" in der Messung bei der Bestimmung des Kreismittelpunktes ausgesondert.

Der auf diese Weise berechnete Kreismittelpunkt ist der berechnete Mittelpunkt des Fasses. Das ganze Verfahren wird solange weitergeführt, bis in alle entsprechenden Ausbeulungen der Konturlinie 6 Kreise eingepasst sind. Bei diesem Vorgehen kommt es regelmäßig vor, dass in einer Ausbeulung für mehrere benachbarte Messpunkte 7 Kreise gefunden werden, die sich sehr stark überdecken und deren Mittelpunkte nicht sehr weit voneinander entfernt sind. Um in dieser Situation den wahrscheinlich besten Kreis zu erhalten, wird aus allen Kreisen, die aus benachbarten Messpunkten entstehen, derjenige mit der kleinsten mittleren Abweichung nach der Feinbestimmung ausgewählt. Figur 2 zeigt auf der rechten Seite die Konturlinie 6 mit den rechnerisch eingepassten Kreisen 8.

Zur Lokalisierung von Fässern mit unterschiedlichen, aber bekannten Durchmessern wird das beschriebene Verfahren für jeden zu untersuchenden Durchmesser angewendet. Hierbei wird mit dem größten Durchmesser begonnen. Bei erfolgreicher Lokalisierung eines Kreises werden die für ihn verwendeten Messpunkte von der weiteren Betrachtung ausgenommen.
Zur Lokalisierung von Fässern mit unbekannten Durchmessern werden abgestuft vorgegebene Durchmesser der Kreise bei der Anpassung angewendet.

Das erfindungsgemäße Verfahren und die zugehörige Anordnung werden vorzugsweise zur Ansteuerung eines Handhabungsgerätes für die Entnahme der Fässer 3 von der Palette 2 eingesetzt. Die Scannermessung wird nach der Entnahme eines jeden Fasses wiederholt, so dass immer die aktuelle Situation auf der Palette erfasst wird. Dies ist erforderlich, da die Fässer durch Kollision bei der Entnahme leicht verschoben werden können.

Im Folgenden wird ein Ausführungsbeispiel dargestellt, bei dem neben der jeweiligen Fassposition auch die Anfahrrichtung des Handhabungsgerätes zur Entnahme der Fässer berechnet wird. Da die Fässer sehr dicht auf der Palette stehen können, wird eine Anfahrrichtung mit minimaler Kollisionsgefahr berechnet. Hierfür werden die Positionen der Fässer, wie oben beschrieben, bestimmt. Die eingepassten Kreise der Fässer, die das zu entnehmende Fass begrenzen, werden durch eine gerade Linie tangential verbunden. Die Verbindungslinie berührt beide Kreise bzw. Fässer außen, das heißt auf der Seite, die zum Abstandssensor 1 bzw. Roboter 4 zeigt. Die Anfahrrichtung des Handhabungsgerätes wird senkrecht zu dieser Linie 12 gewählt. Die Linie 12 schneidet das zu entnehmende Fass, wie dies in Figur 4 angedeutet ist. Der Pfeil gibt hierbei die Anfahrrichtung des Handhabungsgerätes an. Bei Entnahme des Fasses mit einem Bakkengreifer 14 wird dieser bis auf einen Mindestabstand 13 an die Linie 12 herangefahren, wie dies im rechten Teil der Figur 4 zu erkennen ist. Der Mindestabstand 13 wird anhand der Messunsicherheit bei der Positionsbestimmung der Fässer festgelegt. Er soll verhindern, dass der Greifer 14 mit den Nachbarfässern kollidiert. Gleichzeitig muss er möglichst klein gewählt werden, damit das zu entnehmende Fass sicher gegriffen werden kann.

In einer weiteren vorteilhaften Ausführungsform werden die Fässer, die von einem Handhabungsgerät mit Greifer aufgenommen wurden, mit ihrer Stirnfläche an einem CCD-Zeilenscanner 15 vorbeigeführt, der die Oberflächenkontur der Fässer zeilenweise ermittelt. Figur 5 zeigt hierbei den CCD-Zeilenscanner 15, die Bewegungsrichtung 17 des Fasses sowie die Scanebene 16. Während des Vorbeiführens entsteht auf diese Weise ein Höhenprofil der gesamten Fassoberseite. Im Höhenprofil wird versucht, das Spundloch 18 des Fasses 3 als Vertiefung zu finden. Wird es nicht gefunden, so wird angenommen, dass es sich auf der gegenüberliegenden Seite befindet. Dementsprechend wird das Fass je nach Lage des Spundlochs auf der Ober- oder Unterseite durch das Handhabungsgerät abgestellt. Die rechte Seite der Figur 5 zeigt eine Fassoberseite mit Spundloch 18. Die dreidimensionale Oberflächenkontur kann hierbei mit Hilfe der Lichtschnitttechnik ermittelt werden.

Mit Hilfe des durch den CCD-Zeilenscanner 15 ermittelten Höhenprofils kann auch die noch unbekannte Höhe des Fasses bestimmt werden. Sie wird benötigt, um das Fass nach eventueller Drehung problemlos abstellen zu können. Die Bestimmung der Fasshöhe erfolgt hierbei anhand des Höhenprofils in Verbindung mit der bekannten Handhabungsbahn des Greifers bei der Entnahme der Fässer sowie der bekannten Griffhöhe der Fässer über dem Boden.

### Bezugszeichenliste

- 1: Abstandsmesseinrichtung
- 2: Abstellbereich/Palette
- 3: Fass
- 4: Handhabungsgerät/Roboter
- 5: Messebene
- 6: Konturlinie
- 7: untersuchter Messpunkt
- 8: Kreis
- 9: Kreismittelpunkt
- 10: Fixpunkt/gedachter Mittelpunkt des Laserscanners
- 11: Randpunkt
- 12: Gerade Linie
- 13: Mindestabstand
- 14: Backengreifer
- 15: CCD-Zeilenscanner
- 16: Scanebene
- 17: Bewegungsrichtung des Fasses durch den Roboter
- 18: Spundloch

## Patentansprüche

1. Verfahren zum Lokalisieren von zylinderförmigen Objekten (3), die in einem Abstellbereich (2) abgestellt sind, mit folgenden Schritten:
- Erfassen eines Abstandsprofils der Objekte (3) in einer Messebene (5) von einem Fixpunkt (10) auf einer Seite des Abstellbereichs (2) mit einer Abstandsmesseinrichtung (1), wobei das Abstandsprofil eine Konturlinie (6) der zur Abstandsmesseinrichtung (1) gerichteten Seite der im Abstellbereich (2) abgestellten Objekte (3) in der Messebene ergibt;
- rechnerisches Einpassen von Kreisen (8) in die Konturlinie (6); und
- Festlegen der jeweiligen Orte der einzelnen objekte (3) anhand der Mittelpunkte der eingepassten Kreise (8).

2. Verfahren nach Anspruch 1,
**dadurch gekennzeichnet,**
**dass** das rechnerische Einpassen eines Kreises (8) durch folgende Schritte erfolgt:
- Bilden einer Verbindungsgerade, auf der der Fixpunkt (10) und ein Punkt (7) der Konturlinie (6) liegen;
- Bilden eines Kreises (8) mit vorgebbarem Radius, der den Punkt (7) berührt und dessen Mittelpunkt (9) auf der Verbindungsgerade liegt;
- Berechnen des Abstandes von weiteren Punkten auf der Konturlinie (6), die zwischen zwei Tangenten an den Kreis (8) liegen, die sich im Fixpunkt (10) schneiden, zum Mittelpunkt (9) des Kreises und Berechnen einer mittleren Abweichung des Abstandes der weiteren Punkte vom Radius;
- Wiederholen der vorangegangenen Schritte mit anderen Punkten der Konturlinie (6) bis ein vorgebbarer Schwellwert für die mittlere Abweichung unterschritten wird; und,
- falls mit den anderen Punkten der Schwellwert nicht unterschritten wird, Wiederholen der vorangegangenen Schritte jeweils mit einem Kreis (8) mit geändertem Radius bis der Schwellwert unterschritten wird.

3. Verfahren nach Anspruch 2,
**dadurch gekennzeichnet,**
**dass** nach dem Unterschreiten des Schwellwertes die mittlere Abweichung durch Verschieben des Mittelpunktes (9) des Kreises (8) minimiert wird.

4. Verfahren nach einem der Ansprüche 1 bis 3,
**dadurch gekennzeichnet,**
**dass** die Kreise (8) beim rechnerischen Einpassen vorbestimmte Radien aufweisen, die den bekannten Radien der im Abstellbereich (2) abgestellten Objekte (3) entsprechen.

5. Verfahren nach Anspruch 4,
**dadurch gekennzeichnet,**
**dass** beim rechnerischen Einpassen mit dem Kreis (8), der den größten der vorbestimmten Radien aufweist, begonnen wird.

6. Verfahren nach einem der Ansprüche 1 bis 3,
**dadurch gekennzeichnet,**
**dass** beim Einpassen mit einem Kreis (8) eines größten vorgebbaren Radius begonnen wird, wobei dieser Radius beim Einpassen in Stufen zu kleineren Werten erniedrigt wird.

7. Verfahren nach einem der Ansprüche 1 bis 6,
**dadurch gekennzeichnet,**
**dass** das Abstandsprofil der Objekte (3) von einer Seite des Abstellbereichs (2) erfasst wird, von der ein Handhabungsgerät (4) auf die Objekte (3) zugreift.

8. Verfahren nach Anspruch 7,
**dadurch gekennzeichnet,**
**dass** die Zugriffsrichtung des Handhabungsgerätes (4) auf die Objekte (3) senkrecht zu einer tangentialen Verbindungslinie (12) der den jeweils benachbarten Objekten des gerade zu handhabenden Objektes entsprechenden Kreise (8) aus der Konturlinie (6) ermittelt wird.

9. Verfahren nach Anspruch 7 oder 8,
**dadurch gekennzeichnet,**
**dass** die Objekte (3) während einer Handhabung durch das Handhabungsgerät (4) mit einer Stirnfläche an einer zeilenweise detektierenden Messeinrichtung (15) vorbeigeführt werden, die die Oberflächenkontur der Stirnfläche dreidimensional erfasst, wobei aus der Oberflächenkontur eine Information über das Vorliegen oder Nicht-Vorliegen eines Spundlochs (18) auf der Stirnfläche abgeleitet wird.

10. Verfahren nach Anspruch 9,
**dadurch gekennzeichnet,**
**dass** aus mit der Messeinrichtung (15) erfassten Daten und der Kenntnis über die Handhabungscharakteristik des Handhabungsgerätes (4) eine Höhe des Objektes (3) ermittelt wird.

11. Verfahren nach einem der Ansprüche 1 bis 10,
**dadurch gekennzeichnet,**
**dass** die vorangegangenen Verfahrensschritte bei einer Entnahme eines Objektes (3) vom Abstellbereich (2) wiederholt werden.

12. Anordnung zum Lokalisieren von zylinderförmigen Objekten (3), die in einem Abstellbereich (2) abgestellt sind, mit:
- einer Abstandsmesseinrichtung (1) zum Erfassen eines Abstandsprofils der Objekte (3) in einer Messebene (5) von einem Fixpunkt (10) auf einer Seite des Abstellbereichs (2); und
- einer Auswerteeinheit, die so eingerichtet ist, daß sie im Gebranch die jeweiligen Orte der einzelnen Objekte (3) durch rechnerisches Einpassen von Kreisen (8) in eine sich aus dem Abstandsprofil ergebende Konturlinie (6) anhand der Mittelpunkte der eingepassten Kreise (8) ermittelt.

13. Anordnung nach Anspruch 12,
**dadurch gekennzeichnet,**
**dass** weiterhin eine mit der Auswerteeinheit verbundene Handhabungseinrichtung (4) zum Handhaben der Objekte (3) vorgesehen ist.

14. Anordnung nach Anspruch 12 oder 13,
**dadurch gekennzeichnet,**
**dass** die Abstandsmesseinrichtung (1) ein 2D-Laserscanner ist.

15. Anordnung nach Anspruch 12 oder 13,
**dadurch gekennzeichnet,**
**dass** die Abstandsmesseinrichtung (1) ein CCD-Triangulationssensor ist.

16. Anordnung nach einem der Ansprüche 13 bis 15,
**dadurch gekennzeichnet,**
**dass** weiterhin eine zeilenweise detektierende Messeinrichtung (15) zur Ermittlung einer dreidimensionalen Oberflächenkontur einer Stirnfläche der Objekte (3) vorgesehen ist, an der die Objekte bei einer Handhabung durch die Handhabungseinrichtung vorbeigeführt werden können.

## Claims

1. Method of locating objects (3) of cylindrical shape put down in a holding zone (2), comprising the following steps:
- detecting a distance profile of said objects (3) in a measuring plane (5) from a fixed point (10) on one side of said holding zone (2) by means of a distance sensing means (1), with said distance profile furnishing a contour line (6) in said measuring plane of that side of said objects (2) put down in said holding zone (2), which faces said distance sensing means (1);
- computational fitting circles (8) into said contour line (6); and
- determining the respective loci of the individual objects (3) on the basis of the midpoints of said fitted-in circles (8).

2. Method according to Claim 1,
**characterised in**
**that** said computational fitting-in of a circle (8) is performed by the following steps:
- forming a straight connecting line on which said fixed point (10) and a point (7) of said contour line (6) are located;
- forming a circle (8) of a predeterminable radius, which contacts said point (7) and whose midpoint (9) is located on said straight connecting line;
- computing the distances from further points on said contour line (6), which are located between two tangents on said circle (8) that intersect in said fixed point, to said midpoint (9) of said circle and computing a mean variation of the distances of said further points from the radius;
- repeating the preceding steps with other points on said contour line (6) until the value falls short of a predeterminable threshold value of said mean variation; and
- if the values of said other points will not fall short of said threshold value, repeating the preceding steps respectively with a circle (8) of a modified radius until the value falls short of said threshold value.

3. Method according to Claim 2,
**characterised in**
**that** after the value falls short of said threshold value, the mean variation is minimised by shifting the midpoint (9) of said circle (8).

4. Method according to any of the Claims 1 to 3,
**characterised in**
**that** said circles (8) present radii predetermined during the step of computational fitting-in, which correspond to the known radii of said objects (3) put down in said holding zone (2).

5. Method according to Claim 4,
**characterised in**
**that** in the step of computational fitting-in, the operation begins with the circle (8) having the longest one among said predetermined radii.

6. Method according to any of the Claims 1 to 3,
**characterised in**
**that** in the step of computational fitting-in, the operation begins with a circle (8) having a longest predeterminable radius, with this radius being reduced in steps towards smaller values during the fitting-in operation.

7. Method according to any of the Claims 1 to 6,
**characterised in**
**that** said distance profile of said objects (3) is detected from a side of said holding zone (2), from which a manipulator (4) has access to said objects (3).

8. Method according to Claim 7,
**characterised in**
**that** the direction in which said manipulator (4) has access to said objects (3) is determined from said contour line in a direction orthogonal on a tangential connecting line (12) of the circles (8) corresponding to the respective objects adjacent to the object then to be manipulated.

9. Method according to Claim 7 or 8,
**characterised in**
**that** during a manipulation operation by means of said manipulator (4), said objects (3) are passed by an end face along a sensing means (15) detecting by lines, which detects the surface contour of said face in a three-dimensional form, with information about the presence or absence of a tap hole (18) on said end face being derived from said surface contour.

10. Method according to Claim 9,
**characterised in**
**that** a height of said object (3) is determined from the data detected by means of said sensing means (15) and from the knowledge relating to the handling characteristics of said manipulator (4).

11. Method according to any of the Claims 1 to 10,
**characterised in**
**that** the preceding operating steps are repeated by the time of removal of an object (3) from said holding zone (2).

12. Array for locating objects (3) of cylindrical shape put down in a holding zone (2), comprising:
- a distance sensing means (1) for sensing a distance profile of said objects (3) in a measuring plane (5) from a fixed point (10) on one side of said holding zone (2); and
- an analyser unit designed in such a way that in operation it determines the respective loci of the individual objects (3) by computational fitting of circles (8) into a contour line (6) resulting from said distance profile, on the basis of the midpoints of said fitted-in circles (8).

13. Array according to Claim 12,
**characterised in**
**that** moreover a manipulator (4) is provided for manipulating said objects (3), which is connected to said analyser unit.

14. Array according to Claim 12 or 13,
**characterised in**
**that** said distance sensing means (1) is a 2D laser scanner.

15. Array according to Claim 12 or 13,
**characterised in**
**that** said distance sensing means (1) is a CCD triangulation sensor.

16. Array according to any of the Claims 13 to 15,
**characterised in**
**that** moreover a sensing means (15) detecting by lines is provided for detecting a three-dimensional surface contour of an end face of said objects (3), along which said objects are passed by said manipulator by the time of a manipulating operation.

## Revendications

1. Procédé de localisation des objets (3) à forme cylindrique, qui sont déposés dans une zone de dépôt (2), comprenant les opérations suivantes:
- détection d'un profil d'écart desdits objets (3) dans un plan de mesure (5) à partir d'un point fixe (10) d'un côté de ladite zone de dépôt (2) moyennant un moyen écartomètre (1), audit profil d'écart fournissant une ligne de contour (6) dans ledit plan de mesure de ce côté desdits objets (2) déposés dans ladite zone de dépôt (2), qui est tourné vers ledit moyen écartomètre (1);
- insérer, par calcul mathématique, des cercles insérer, par calcul mathématique, des cercles (8) dans ladite ligne de contour (6); et
- établir les lieus respectifs des objets individuels (3) à la base des centres desdits cercles insérés (8).

2. Procédé selon la revendication 1,
**caractérisé en ce**
**que** ladite insertion, par calcul mathématique, d'un cercle (8) est réalisée par les étapes suivantes:
- former une ligne droite de jonction, sur laquelle se trouvent ledit point fixe (10) et un point (7) de ladite ligne de contour (6);
- former un cercle (8) à un rayon prédéterminable, qui est contigu audit point (7) et dont le centre (9) se trouve sur la ligne droite de jonction;
- calculer les écarts à partir des autres points sur ladite ligne de contour (6), qui se trouvent entre deux tangentes sur ledit cercle (8), qui se coupent dans ledit point fixe, vers ledit centre (9) dudit cercle et calculer une divergence moyenne des écarts desdits autres points du rayon;
- répéter les opérations sus-définies à la base des autres points sur ladite ligne de contour (6), jusqu'à ce que la valeur dépasse, vers le bas, une valeur de seuil prédéterminable de ladite divergence moyenne; et
- si les valeurs desdits autres points ne dépassent pas, vers le bas, ladite valeur de seuil, répéter les opérations sus-définies à la base d'un cercle respectif (8) d'un rayon modifié, jusqu'à ce que la valeur dépasse, vers le bas, ladite valeur de seuil.

3. Procédé selon la revendication 2,
**caractérisé en ce**
**que** la divergence moyenne est minimisée par décalage du centre (9) dudit cercle (8), dès que la valeur a dépassé, vers le bas, ladite valeur de seuil.

4. Procédé selon une quelconque des revendications 1 à 3,
**caractérisé en ce**
lesdits cercles (8) présent des rayons prédéterminés au cours de l'opération d'insertion, par calcul mathématique, qui correspondent aux rayons connus desdits objets (3) déposés dans ladite zone de dépôt (2).

5. Procédé selon la revendication 4,
**caractérisé en ce**
**que** dans l'opération d'insertion, par calcul mathématique, l'opération commence avec le cercle (8) ayant le rayon plus long parmi lesdits rayons prédéterminés.

6. Procédé selon une quelconque des revendications 1 à 3,
**caractérisé en ce**
**que** dans l'opération d'insertion, par calcul mathématique, l'opération commence avec le cercle (8) ayant un rayon le plus long prédéterminable, à ce rayon étant réduit pas à pas vers des plus petites valeurs au cours de l'opération d'insertion.

7. Procédé selon une quelconque des revendications 1 à 6,
**caractérisé en ce**
**que** ledit profil d'écart desdits objets (3) est établi à partir d'un côté de ladite zone de dépôt (2), à partir duquel un manipulateur (4) peut accéder auxdits objets (3).

8. Procédé selon la revendication 7,
**caractérisé en ce**
**que** la direction, selon laquelle ledit manipulateur (4) peut accéder auxdits objets (3), est établie à la base de ladite ligne de contour en un sens orthogonal sur une ligne tangentielle de jonction (12) des cercles (8), qui correspondent aux objets respectifs adjacents à l'objet à manipuler à ce point de temps.

9. Procédé selon la revendication 7 ou 8,
**caractérisé en ce**
**qu'**au cours d'une opération de manipulation moyennant ledit manipulateur (4), lesdits objets (3) sont passés par une surface terminale devant un moyen de mesure (15) à détection par lignes, qui détecte le contour de surface de ladite surface sous une forme tridimensionnelle, aux informations sur la présence ou absence d'un trou de bonde (18) sur ladite surface terminale étant dérivées dudit contour de surface.

10. Procédé selon la revendication 9,
**caractérisé en ce**
**qu'**une hauteur dudit objet (3) est établie par dérivation des données détectées moyennant ledit moyen de mesure (15) et des connaissances relatives aux caractéristiques de maniement dudit manipulateur (4).

11. Procédé selon une quelconque des revendications 1 à 10,
**caractérisé en ce**
**que** les étapes d'opération précédentes sont répétées au temps de prélèvement d'un objet (3) en dehors de zone de dépôt (2).

12. Arrangement de localisation des objets (3) à forme cylindrique, déposés dans une zone de dépôt (2), comprenant:
- un moyen écartomètre (1) à détecter un profil d'écart desdits objets (3) dans un plan de mesure (5) à partir d'un point fixe (10) d'un côté de ladite zone de dépôt (2); et
- une unité d'analyse conçue de façon qu'en service, elle établit les lieus respectifs des objets individuels (3) en insérant, par calcul mathématique, des cercles (8) dans une ligne de contour (6), qui résulte dudit profil d'écart, à la base des centres desdits cercles insérés (8).

13. Arrangement selon la revendication 12,
**caractérisé en ce**
**qu'**au plus, un manipulateur (4) est disposé pour le maniement desdits objets (3), qui est relié à ladite unité d'analyse.

14. Arrangement selon la revendication 12 ou 13,
**caractérisé en ce**
**que** ledit moyen écartomètre (1) est un scanneur à laser du type 2 D.

15. Arrangement selon la revendication 12 ou 13,
**caractérisé en ce**
**que** ledit moyen écartomètre (1) est un détecteur à triangulation du type CCD.

16. Arrangement selon une quelconque des revendications 13 à 15,
**caractérisé en ce**
**qu'**au plus, un moyen de mesure (15) à détection par lignes est disposé afin de détecter le contour de surface tridimensionnel desdits objets (3), devant lequel ledit manipulateur passe lesdits objets au temps d'une opération de maniement.
